Europäisches Patentamt

European Patent Office

Office européen des brevets

(19)

(11) Veröffentlichungsnummer: **0 387 894 B1**

(12) # EUROPÄISCHE PATENTSCHRIFT

(45) Veröffentlichungstag der Patentschrift: **08.06.94**

(51) Int. Cl.5: **C08G 18/10**, C08G 18/38

(21) Anmeldenummer: **90104999.9**

(22) Anmeldetag: **16.03.90**

(54) **Kettenverlängerungsmittel für 4,4'-Diisocyanato-diphenylmethan-prepolymere für gegossene Polyurethan-Elastomere (PU-Elastomere).**

(30) Priorität: **17.03.89 CH 1002/89**

(43) Veröffentlichungstag der Anmeldung:
**19.09.90 Patentblatt 90/38**

(45) Bekanntmachung des Hinweises auf die
Patenterteilung:
**08.06.94 Patentblatt 94/23**

(84) Benannte Vertragsstaaten:
**AT BE CH DE DK ES FR GB IT LI LU NL SE**

(56) Entgegenhaltungen:
**EP-A- 0 220 641**

(73) Patentinhaber: **LONZA AG**
**Gampel/Wallis**
**Geschäftsleitung Basel**
**CH-4002 Basel(CH)**

(72) Erfinder: **Völker, Theodor, Dr.**
**Kleestrasse 7**
**Reinach (Kanton Baselland)(CH)**
Erfinder: **Althaus, Hans, Dr.**
**Holzackerweg 6**
**CH Glis (Kanton Wallis)(CH)**
Erfinder: **Schmidt, Andreas, Dr.**
**Hubackerweg 32**
**CH Reinach (Kanton Baselland)(CH)**

(74) Vertreter: **Weinhold, Peter, Dr. et al**
**Patentanwälte Dipl.-Ing. G. Dannenberg**
**Dr. P. Weinhold**
**Dr. D. Gudel**
**Dipl.-Ing. S. Schubert**
**Dr. P. Barz**
**Siegfriedstrasse 8**
**D-80803 München (DE)**

**Beschreibung**

Die Erfindung betrifft neue Meta-chlorierte Methylenbis-aniline als Kettenverlängerungsmittel für MDI-Prepolymere insbesondere für stark beanspruchte gegossene Polyurethan-Elastomere.

Gegossene PU-Elastomere gehören zu den "engineering"-Werkstoffen, deren Eigenschaften in einem weiten Bereich durch Variieren der Bausteine Isocyanat, Polyol und Kettenverlängerungsmittel verändert werden können.

Einen besonderen Aspekt in dieser Kunststoffklasse hat die Toxizität der Edukte. So wird, sofern eigenschaftsmässig realisierbar, versucht, vom bekannten Isocyanat TDI (Toluylendiisocyanat), wegen seiner Flüchtigkeit und Toxizität (MAK-Wert 0,02 ppm), und vom klassischen Kettenverlängerungsmittel MBOCA (4,4′-Methylenbis(o-chloranilin)), wegen seiner nachgewiesenen mutagenen Eigenschaften, wegzukommen.

Die Tendenz besteht deshalb, TDI durch MDI sowie mutagene Kettenverlängerungsmittel, wie MBOCA, durch nicht mutagene zu ersetzen, ohne dass Nachteile in den PU-Elastomereigenschaften in Kauf genommen werden müssen. Die Unverträglichkeit von MBOCA mit MDI-Prepolymeren (liefert z.T. inhomogene und opake Werkstoffe) unterstützt die Forderung nach geeignetem Ersatz.

Für stark beanspruchte gegossene PU-Elastomere auf MDI-Prepolymerbasis wird daher eine möglichst hohe Härte, eine möglichst hohe Dehnspannung (E-Modul) sowie eine gute Weiterreissfestigkeit (Strukturfestigkeit) bei 20 ° C, insbesondere bei 60 ° C, gefordert.

Bekannt ist, für PU-Elastomere auf MDI-Prepolymerbasis 1,4-Butandiol als Kettenverlängerungsmittel einzusetzen (vgl. z.B. Becker braun Kunststoff Handbuch, 2. Auflage, Band 7, Polyurethane, S.31 ff.). Den hohen Anforderungen an die Wärmeformbeständigkeit können auf dieser Basis hergestellte PU-Elastomere aber nicht genügen.

Aus EP-Anmeldung 0 220 641 ist bekannt, 4,4′-Methylenbis-(meta-chlor-2,6-dialkyl)-aniline resp. 4,4′-Methylenbis(2,5-dichlor-6-alkyl)-aniline als Kettenverlängerungsmittel in MDI-Prepolymeren einzusetzen. Zwar sind gute PU-Elastomereigenschaften bezüglich Härte und Steifigkeit erreichbar, wegen der Topfzeiten (pot-life) im Sekundenbereich sind die Verarbeitungszeiten für gegossene PU-Elastomere aber zu kurz.

Es bestand daher die Aufgabe, ein Kettenverlängerungsmittel für MDI-Prepolymere, insbesondere für stark beanspruchte gegossene PU-Elastomere zu entwickeln, das die genannten Nachteile nicht aufweist.

Die Aufgabe konnte überraschenderweise gelöst werden durch das Auffinden von neuen Kettenverlängerungsmitteln gemäss Patentanspruch 1.

Die erfindungsgemässen Kettenverlängerungsmittel bestehen aus mindestens 1 Gew.% 4,4'-Methylenbis(2,3-dichlor-6-ethylanilin)
gegebenenfalls 4,4'-Methylenbis(2,5-dichlor-6-ethylanilin)
0,1 bis 15 Gew.% 4,4'-Methylenbis(3-chlor-2,6-diethylanilin)
sowie 30 bis 60 Gew.%
2',3,3',6-Tetrachlor-2,6'-diethyl-4,4'-methylendianilin
und
3,3',6'-Trichlor-2,2',6-triethyl-4,4'-methylendianilin
und
2',3,3'-Trichlor-2,6,6'-triethyl-4,4'-methylendianilin
als Gemisch oder 30 bis 48 Gew.% der letztgenannten Verbindung alleine.
Bevorzugt enthalten die Kettenverlängerungsmittel:
5 bis 45 Gew.% 4,4'-Methylenbis(2,3-dichlor-6-ethylanilin)
0 bis 45 Gew.% 4,4'-Methylenbis(2,5-dichlor-6-ethylanilin)
0,1 bis 15 Gew.% 4,4'-Methylenbis(3-chlor-2,6-diethylanilin)
sowie 30 bis 60 Gew.%
2',3,3',6-Tetrachlor-2,6'-diethyl-4,4'-methylendianilin
und
3,3',6'-Trichlor-2,2',6-triethyl-4,4'-methylendianilin
und
2',3,3'-Trichlor-2,6,6'-triethyl-4,4'-methylendianilin als Gemisch oder 30 bis 48 Gew.% der letztgenannten Verbindung alleine.

Der Schmelzpunkt der erfindungsgemässen Kettenverlängerungsmittel liegt vorteilhaft nicht über 140 ° C, besonders bevorzugt nicht über 120 ° C, damit eine problemlose Verarbeitung, ohne spezielle Vorkehrungen zu treffen, gewährleistet ist.

Da die Fachwelt bisher die Ansicht vertrat, dass mit Mischungen von Kettenverlängerungsmitteln, wegen der Störung des Aufbaues der Hartphase, schlechte PU-Elastomereigenschaften, vor allem in Bezug auf die Temperaturbeständigkeit, zu erwarten sind, ist die erfindungsgemässe Lösung besonders überra-

EP 0 387 894 B1

schend. Die Herstellung der erfindungsgemässen Kettenverlängerungsmitteln erfolgt auf bekannte Weise, z.B. gemäss EP-Anmeldung 0 171 588 durch Kondensation der entsprechenden Aniline: 2,3-Dichlor-6-ethylanilin, 2,5-Dichlor-6-ethylanilin und 3-Chlor-2,6-diethylanilin mit Formaldehyd in saurem Medium.

Mit der Zusammensetzung der erfindungsgemässen Kettenverlängerungsmitteln übereinstimmend wird für die Kondensation

2,3-Dichlor-6-ethylanilin in Mengen von 1 bis 84 Gew.%,

2,5-Dichlor-6-ethylanilin in Mengen von 0 bis 85 Gew.% und

3-Chlor-2,6-diethylanilin in Mengen von 3 bis 40 Gew.%

eingesetzt.

Entsprechend der variierbaren Zusammensetzung der Kettenverlängerungsmittel ändern sich die physikalischen Eigenschaften des Endproduktes des PU-Elastomers.

Ein weiterer Aspekt der Erfindung ist daher, dass auf die Anwendung ausgerichtete PU-Elastomere hergestellt werden können.

Die Applikation der erfindungsgemässen Kettenverlängerungsmittel erfolgt mit gängigen MDI-Prepolymeren, zweckmässig auf Basis von Polyhydroxyverbindungen, wie Polyesterpolyolen, Polycaprolactonen oder Polyetherpolyolen die einen Isocyanatgehalt von 3 bis 15%, bevorzugt von 5 bis 10%, aufweisen.

Ebenso können die üblichen Katalysatoren, wie Tetrabutandiamin (TMBDA), Diazobicyclooctan (DABCO), Phenylquecksilberpropionat und auch Dibutylzinndilaurat (DBTC), oder Kombinationen davon, sowie weitere Zusätze, wie Weichmacher, Treibmittel oder Flammschutzmittel, eingesetzt werden.

Vorzugsweise wird aber ohne Katalysatorzusatz gearbeitet, was im Hinblick auf die z.T. hohe Toxizität und schlechte Umweltverträglichkeit der Katalysatoren ein weiterer wesentlicher Vorteil ist.

Zweckmässig werden die erfindungsgemässen Kettenverlängerungsmittel in Mengen von 0,9 bis 1,1 Mol, vorzugsweise in Mengen von 0,95 bis 1,05 Mol pro Mol NCO-Gruppen, zum Prepolymerreaktionssystem eingearbeitet.

Die resultierenden, gegossenen PU-Elastomere zeichnen sich in besonderem Masse durch ihre hohe Härte und Steifigkeit sowie durch ihre Strukturfestigkeit in einem grossen Temperaturbereich aus, so dass sich diese Produkte hervorragend für verschleissfeste Hartgummianwendungen in z.B. stark beanspruchten Teilen von Bergbaumaschinen als Oberflächenschutz oder auch als Beschichtungen von Pipelines, Walzen (z.B. Walzen für die Papierherstellung), Rollen und PU-Reifen eignen.

Folgende Beispiele und Vergleichsversuche sollen die Erfindung erläutern.

Uebersicht über die für die Kondensation eingesetzten Aniline

a 2,3-Dichlor-6-ethylanilin

b 2,5-Dichlor-6-ethylanilin

c 3-Chlor-2,6-diethylanilin

| Beispiel | a Gew.% | b Gew.% | c Gew.% |
|----------|---------|---------|---------|
| 1 | 45,9 | 48,6 | 5,5 |
| 2 | 14,7 | 81,7 | 3,6 |
| 3 | 38,6 | 56,4 | 5,0 |
| 4 | 53,2 | 40,8 | 6,0 |
| 5 | 61,5 | 32,1 | 6,4 |
| 6 | 68,8 | 24,3 | 6,9 |
| 7 | 78,0 | 14,6 | 7,4 |
| 8 | 65,0 | 0 | 35 |

Uebersicht über die Komponenten der getesteten Kettenverlängerungsmittel

A 4,4'-Methylenbis(2,3-dichlor-6-ethylanilin)

B 4,4'-Methylenbis(2,5-dichlor-6-ethylanilin)

C 4,4'-Methylenbis(3-chlor-2,6-diethylanilin)

D 2',3,3',6-Tetrachlor-2,6'-diethyl-4,4'-methylendianilin

E 3,3',6'-Trichlor-2,2',6-triethyl-4,4'-methylendianilin

F 2',3,3'-Trichlor-2,6,6'-triethyl-4,4'-methylendianilin

3

| Beispiel | A Gew.% | B Gew.% | C Gew.% | D + E + F Gew.% | Fp C°C | Bemerkung |
|---|---|---|---|---|---|---|
| 1 | 21,1 | 23,6 | 3,0 | 52,3 | 84-91 | Erfindung |
| 2 | 2,2 | 66,7 | 0,13 | 31,0 | 114-135 | Erfindung |
| 3 | 14,9 | 31,8 | 0,25 | 53,0 | 98-99,1 | Erfindung |
| 4 | 28,3 | 16,6 | 0,36 | 54,7 | 83-111 | Erfindung |
| 5 | 37,8 | 10,3 | 0,41 | 51,5 | 89-120 | Erfindung |
| 6 | 47,3 | 5,9 | 0,48 | 46,3 | 108-132 | Erfindung |
| 7 | 60,8 | 2,1 | 0,55 | 36,6 | 123-130 | Erfindung |
| 8 | 42,3 | 0 | 12,25 | 45,5(nur F) | 102-112 | Erfindung |
| I | 4,4'-Methylenbis(2-chloranilin) MBOCA | | | | 108-111 | Vergleich |
| II | 1,4-Butandiol | | | | 16 | Vergleich |

Zum Testen der Kettenverlängerungsmittel wurden Prepolymere auf Basis von Polycaprolacton (CAPA) mit einem Molekulargewicht von ca. 2000, von Polytetramethylenglycol (PTMG) mit einem Molekulargewicht von 1000 und 2000 mit Methylenbisphenylisocyanat (MDI) auf übliche Weise hergestellt (z.B. entsprechend EP-Anmeldung 0 220 641).

Das Prepolymer auf Basis CAPA enthielt 6,5% freie NCO-Gruppen. Das Prepolymer auf Basis PTMG 1000 enthielt 9,8-10,1% freie NCO-Gruppen.

Das Prepolymer auf Basis PTMG 2000 enthielt 8,4% freie NCO-Gruppen.

Zur Herstellung des Prüfkörpers wurden die erfindungsgemässen Kettenverlängerungsmittel, auch die Vergleichssubstanz MBOCA, im molaren stöchiometrischen Verhältnis (NCO-Gruppe zur Summe von freien $NH_2$-Gruppen 1:1) direkt mit den Prepolymeren bei 60°C während 10 bis 15 Sekunden vermischt und schliesslich in eine auf 100°C gewärmte Form gegossen.

Wird der Prüfkörper mit Butandiol (Vergleichsbeispiel II) hergestellt, ist es notwendig, mit Katalysatorzusatz, vorzugsweise mit Phenylquecksilberpropionat oder Dibenzylzinndilaurat, zu arbeiten.

Die Topfzeit wurde bestimmt, indem die Zeit nach dem Giessen in die Form gemessen wurde, bis das Polyurethan-Gemisch an einem gleichmässig horizontal bewegten, eingetauchten Spatel Fäden zieht.

In Abständen von 2 bis 5 Minuten wurde, durch Eindringen eines Fingernagels in den gegossenen Prüfkörper, der Härtungszustand überprüft.

War kein Eindringen mehr feststellbar, wurde die Zeit gemessen und als "Nagelzeit" notiert.

Aus dem ausgehärteten Polyurethan wurden die Prüfkörper herausgeschnitten und folgenden physikalischen Prüfungen unterzogen.

| | |
|---|---|
| Shore Härte D (H) | gemäss DIN 53505 bzw. shore hardness entsprechend ASTM-D: 2240 bzw. 1706. |
| Strukturfestigkeit (SF) | gemäss DIN 53515 in N/mm |
| Zugfestigkeit (ZF) | tensile strength in N/mm2 gemäss DIN 53455 |
| (TZ) | Topfzeit ("pot life") |
| (NZ) | Nagelzeit (demoulding time) |
| Dehnspannung (TS) | tensile stress in N/mm2 gemäss DIN 53455 |

4

Tabelle 1

**Ergebnisse mit Prepolymer Polycaprolacton (CAPA)**

| Beispiele | H | TZ (s) | NZ (min) | SF N/mm 60°C | 20°C | TS N/mm2 3% | 100% | ZF N/mm2 | Aspekt | Bemerkung |
|---|---|---|---|---|---|---|---|---|---|---|
| 1 | 53 | 75 | 52 | 63 | 63 | 5,5 | 12,3 | 40,0 | transparent zäh | Erfindung |
| 2 | 52 | 130 | 40 | 67 | 87 | 3,3 | 14,7 | 39,9 | " | Erfindung |
| 3 | 53 | 135 | 36 | 72 | 86 | 3,5 | 14,3 | 34,1 | " | Erfindung |
| 4 | 53 | 130 | 28 | 72 | 87 | 3,7 | 15,0 | 33,8 | " | Erfindung |
| 5 | 53 | 145 | 25 | 82 | 93 | 3,4 | 14,4 | 36,0 | " | Erfindung |
| 6 | 54 | 180 | 50 | 62 | 88 | 6,9 | 13,3 | 37,4 | " | Erfindung |
| 7 | 54 | 180 | 60 | 66 | 77 | 6,9 | 12,5 | 33,6 | " | Erfindung |
| 8 | 55 | 35 | 38 | 69 | 78 | 6,2 | 13,4 | 32,9 | . | Erfindung |
| I | 68 | 45 | 9 | 91 | 98 | 13,4 | 17,7 | 19,9 | inhomogen, spröde | Vergleich |
| II[1] | 40 | 180 | 30 | 47 | 79 | 2,3 | 9,5 | 35,1 | trüb, weich | Vergleich |
| II[2] | 44 | 35 | 9 | 53 | 81 | 1,9 | 9,2 | 22,4 | trüb, weich | Vergleich |

1) Phenylquecksilberpropionat
2) Dibutylzinndilaurat

EP 0 387 894 B1

Tabelle 2

**Ergebnisse mit Prepolymer Polytetramethylenglycol PTMG 1000**

| Beispiele | H | TZ (s) | NZ (min) | SF N/mm | | TS N/mm2 | | ZF N/mm2 | Aspekt | Bemerkung |
|---|---|---|---|---|---|---|---|---|---|---|
| | | | | 60°C | 20°C | 3% | 100% | | | |
| 1 | 71 | 120 | 25 | 70 | 108 | 21,2 | 32,2 | 42,7 | transparent hart | Erfindung |
| I | 68 | 25 | 5 | 113 | 92 | 14,0 | 20,1 | 27,8 | inhomogen spröde | Vergleich |
| II[1] | 45 | 25 | 3 | 38 | 84 | 1,9 | 10,5 | 25,1 | trüb, weich | Vergleich |
| II[2] | 42 | 210 | 16 | 40 | 87 | 2,6 | 11,7 | 34,1 | trüb, weich | Vergleich |

1) Dibutylzinndilaurat
2) Phenylquecksilberpropionat

EP 0 387 894 B1

Tabelle 3

Ergebnisse mit Prepolymer Polytetramethylenglycol PTMG 2000

| Beispiele | H | TZ (s) | NZ (min) | SF N/mm 60°C | SF N/mm 20°C | TS N/mm2 3% | TS N/mm2 100% | ZF N/mm2 | Aspekt | Bemerkung |
|---|---|---|---|---|---|---|---|---|---|---|
| 1 | 60 | 140 | 12 | 57 | 70 | 11,5 | 18,2 | 35,6 | transparent hart | Erfindung |
| I | 64 | 35 | 9 | 66 | 71 | 11,4 | 16,8 | 22,5 | inhomogen spröde | Vergleich |
| II[1] | 43 | 25 | 11 | 44 | 79 | 2,1 | 9,0 | 28,0 | trüb, weich | Vergleich |
| II[2] | 45 | 120 | 23 | 36 | 82 | 2,5 | 16,4 | 20,5 | trüb, weich | Vergleich |

1) Dibutylzinndilaurat
2) Phenylquecksilberpropionat

**Patentansprüche**

**Patentansprüche für folgende Vertragsstaaten : AT, BE, CH, DE, DK, FR, GB, IT, LI, LU, NL, SE**

1. Kettenverlängerungsmittel auf Basis von chlorierten 4,4'-Methylenbis-anilinen für p-Phenylen-methylendiisocyanat(MDI)-prepolymere für gegossene Polyurethan-Elastomere (PU-Elastomere), bestehend aus

mindestens 1 Gew.% 4,4'-Methylenbis(2,3-dichlor-6-ethylanilin),

gegebenenfalls 4,4'-Methylenbis(2,5-dichlor-6-ethylanilin),

0,1 - 15 Gew.% 4,4'-Methylenbis(3-chlor-2,6-diethylanilin),

30 - 60 Gew.%

2',3,3',6-Tetrachlor-2,6'-diethyl-4,4'-methylendianilin

und

3,3',6'-Trichlor-2,2',6-triethyl-4,4'-methylendianilin

und

2',3,3'-Trichlor-2,6,6'-triethyl-4,4'-methylendianilin als

Gemisch oder 30 - 48 Gew.%

2',3,3'-Trichlor-2,6,6'-triethyl-4,4'-methylendianilin

alleine.

**2.** Kettenverlängerungsmittel gemäss Patentanspruch 1, enthaltend:

5 bis 45 Gew.% 4,4'-Methylenbis(2,3-dichlor-6-ethylanilin)

0 bis 45 Gew.% 4,4'-Methylenbis(2,5-dichlor-6-ethylanilin)

0,1 bis 15 Gew.% 4,4'-Methylenbis(3-chlor-2,6-diethylanilin)

sowie 30 bis 60 Gew.%

2′,3,3′,6-Tetrachlor-2,6′-diethyl-4,4′-methylendianilin

und

3,3′,6′-Trichlor-2,2′,6-triethyl-4,4′-methylendianilin

und

2′,3,3′-Trichlor-2,6,6′-triethyl-4,4′-methylendianilin

als Gemisch oder

30 bis 48 Gew.% der letztgenannten Verbindung alleine.

**3.** Kettenverlängerungsmittel gemäss Patentansprüchen 1 und 2, dadurch gekennzeichnet, dass deren Schmelzpunkt 140°C nicht übersteigt.

**4.** Polyurethanelastomer, enthaltend Kettenverlängerungsmittel gemäss mindestens einem der Patentansprüche 1 bis 3.

**Patentansprüche für folgenden Vertragsstaat : ES**

**1.** Verfahren zur Herstellung gegossener Polyurethan-Elastomeren (PU-Elastomere), dadurch gekennzeichnet, daß Kettenverlängerungsmittel auf Basis von chlorierten 4,4'-Methylenbis-anilinen, bestehend aus

mindestens 1 Gew.% 4,4'-Methylenbis(2,3-dichlor-6-ethylanilin),

gegebenenfalls 4,4'-Methylenbis(2,5-dichlor-6-ethylanilin),

0,1 - 15 Gew.% 4,4'-Methylenbis(3-chlor-2,6-diethylanilin),

30 - 60 Gew.%

2',3,3',6-Tetrachlor-2,6'-diethyl-4,4'-methylendianilin

und

3,3',6'-Trichlor-2,2',6-triethyl-4,4'-methylendianilin

und

2',3,3'-Trichlor-2,6,6'-triethyl-4,4'-methylendianilin als

Gemisch oder 30 - 48 Gew.%

2',3,3'-Trichlor-2,6,6'-triethyl-4,4'-methylendianilin

alleine,

Zu p-Phenylen-methylendiisocyanat(MDI)-Prepolymeren, zweckmäßig auf Basis von Polyhydroxyverbindungen, wie Polyesterpolyolen, Polycaprolactonen oder Polyetherpolyolen, die einen Isocyanatgehalt von 3 bis 15% aufweisen,

gegebenenfalls in Gegenwart üblicher Katalysatoren, Weichmacher, Treibmittel und/oder Flammschutzmittel,

zugesetzt werden,

wobei die Kettenverlängerungsmittel in Mengen von 0,9 bis 1,1 Mol, pro Mol NCO-Gruppen, zum Prepolymer eingearbeitet werden.

2. Kettenverlängerungsmittel auf Basis von chlorierten 4,4'-Methylenbis-anilinen für p-Phenylen-methylendiisocyanat(MDI)-prepolymere für gegossene Polyurethan-Elastomere (PU-Elastomere), bestehend aus

mindestens 1 Gew.% 4,4'-Methylenbis(2,3-dichlor-6-ethylanilin),

gegebenenfalls 4,4'-Methylenbis(2,5-dichlor-6-ethylanilin),

0,1 - 15 Gew.% 4,4'-Methylenbis(3-chlor-2,6-diethylanilin),

30 - 60 Gew.%

2',3,3',6-Tetrachlor-2,6'-diethyl-4,4'-methylendianilin

und

3,3',6'-Trichlor-2,2',6-triethyl-4,4'-methylendianilin

und

2',3,3'-Trichlor-2,6,6'-triethyl-4,4'-methylendianilin als

Gemisch oder 30 - 48 Gew.%

2',3,3'-Trichlor-2,6,6'-triethyl-4,4'-methylendianilin

alleine.

3. Kettenverlängerungsmittel gemäss Patentanspruch 2, enthaltend:

5 bis 45 Gew.% 4,4'-Methylenbis(2,3-dichlor-6-ethylanilin)

0 bis 45 Gew.% 4,4'-Methylenbis(2,5-dichlor-6-ethylanilin)

0,1 bis 15 Gew.% 4,4'-Methylenbis(3-chlor-2,6-diethylanilin)

sowie 30 bis 60 Gew.%

2',3,3',6-Tetrachlor-2,6'-diethyl-4,4'-methylendianilin

und

3,3',6'-Trichlor-2,2',6-triethyl-4,4'-methylendianilin

und

2',3,3'-Trichlor-2,6,6'-triethyl-4,4'-methylendianilin

als Gemisch oder

30 bis 48 Gew.% der letztgenannten Verbindung alleine.

4. Kettenverlängerungsmittel gemäss Patentansprüchen 1 bis 3, dadurch gekennzeichnet, dass deren Schmelzpunkt 140°C nicht übersteigt.

5. Polyurethanelastomer, enthaltend Kettenverlängerungsmittel gemäss mindestens einem der Patentansprüche 1 bis 4.

**Claims**
**Claims for the following Contracting States : AT, BE, CH, DE, DK, FR, GB, IT, LI, LU, NL, SE**

1. Chain-extending agents on the basis of chlorinated 4,4'-methylene-bis-anilines for p-phenylene-methylene diisocyanate (MDI) prepolymers intended for cast polyurethane elastomers (PU-elastomers), consisting of:

at least 1% by weight of 4,4'-methylene-bis-(2,3-dichloro-6-ethyl aniline),

optionally 4,4'-methylene-bis-(2,5-dichloro-6-ethyl aniline),

0.1 to 15% by weight of 4,4'-methylene-bis-(3-chloro-2,6-diethyl aniline),

30 to 60% by weight of

2',3,3',6-tetrachloro-2,6'-diethyl-4,4'-methylene dianiline

and

3,3',6'-trichloro-2,2',6-triethyl-4,4'-methylene dianiline

and

2'3,3'-trichloro-2,6,6'-triethyl-4,4'-methylene dianiline

as a mixture, or

30 to 48% by weight of 2',3,3'-trichloro-2,6,6'-triethyl-4,4'-methylene dianiline alone.

2. The chain-extending agents according to Claim 1, containing:

5 to 45% by weight of 4,4'-methylene-bis-(2,3-dichloro-6-ethyl aniline),

0 to 45% by weight of 4,4'-methylene-bis-(2,5-dichloro-6-ethyl aniline),

0.1 to 15% by weight of 4,4'-methylene-bis-(3-chloro-2,6-diethyl aniline),

as well as 30 to 60% by weight of

EP 0 387 894 B1

2',3,3',6-tetrachloro-2,6'-diethyl-4,4'-methylene dianiline
and
3,3',6'-trichloro-2,2',6-triethyl-4,4'-methylene dianiline
and
2',3,3'-trichloro-2,6,6'-triethyl-4,4'-methylene dianiline
as a mixture, or
30 to 48% by weight of the last mentioned compound alone.

3. The chain-extending agents according to Claims 1 and 2 having a melting point of not more than 140°C.

4. Polyurethane elastomer containing a chain-extending agent according to at least one of Claims 1 to 3.

**Claims for the following Contracting State : ES**

1. A process for preparing cast polyurethane elastomers (PU-elastomers), characterized in that chain-extending agents on the basis of chlorinated 4,4'-methylene-bis-anilines, consisting of
at least 1% by weight of 4,4'-methylene-bis-(2,3-dichloro-6-ethyl aniline),
optionally 4,4'-methylene-bis-(2,5-dichloro-6-ethyl aniline),
0.1 to 15% by weight of 4,4'-methylene-bis-(3-chloro-2,6-diethyl aniline),
30 to 60% by weight of
2',3,3',6-tetrachloro-2,6'-diethyl-4,4'-methylene dianiline
and
3,3',6'-trichloro-2,2',6-triethyl-4,4'-methylene dianiline
and
2',3,3'-trichloro-2,6,6'-triethyl-4,4'-methylere dianiline
as a mixture, or
30 to 48% by weight of 2',3,3'-trichloro-2,6,6'-triethyl-4,4'-methylene dianiline alone, are added to p-phenylene-methylene diisocyanate (MDI) prepolymers, suitably on the basis of polyhydroxy compounds such as polyester polyols, polycaprolactones or polyether polyols,having an isocyanate content of from 3 to 15%, optionally in the presence of conventional catalysts, plasticizers, blowing agents and/or flame-proofing agents, said chain-extending agents being incorporated into the prepolymers in amounts of from 0.9 to 1.1 mole per mole of NCO-groups.

2. Chain-extending agents on the basis of chlorinated 4,4'-methylene-bis-anilines for p-phenylene-methylene diisocyanate (MDI) prepolymers intended for cast polyurethane elastomers (PU-elastomers), consisting of:
at least 1% by weight of 4,4'-methylene-bis-(2,3-dichloro-6-ethyl aniline),
optionally 4,4'-methylene-bis-(2,5-dichloro-6-ethyl aniline),
0.1 to 15% by weight of 4,4'-methylene-bis-(3-chloro-2,6-diethyl aniline),
30 to 60% by weight of
2',3,3',6-tetrachloro-2,6'-diethyl-4,4'-methylene dianiline
and
3,3',6'-trichloro-2,2',6-triethyl-4,4'-methylene dianiline
and
2',3,3'-trichloro-2,6,6'-triethyl-4,4'-methylene dianiline
as a mixture, or
30 to 48% by weight of 2',3,3'-trichloro-2,6,6'-triethyl-4,4'-methylene dianiline alone.

3. The chain-extending agents according to Claim 2, containing:
5 to 45% by weight of 4,4'-methylene-bis-(2,3-dichloro-6-ethyl aniline),
0 to 45% by weight of 4,4'-methylene-bis-(2,5-dichloro-6-ethyl aniline),
0.1 to 15% by weight of 4,4'-methylene-bis-(3-chloro-2,6-diethyl aniline),
as well as 30 to 60% by weight of
2',3,3',6-tetrachloro-2,6'-diethyl-4,4'-methylene dianiline
and
3,3',6'-trichloro-2,2',6-triethyl-4,4'-methylene dianiline
and

10

2',3,3'-trichloro-2,6,6'-triethyl-4,4'-methylene dianiline
as a mixture, or
30 to 48% by weight of the last mentioned compound alone.

4. The chain-extending agents according to Claims 1 to 3 characterized in that their melting point is not above 140°C.

5. Polyurethane elastomer containing a chain-extending agent according to at least one of Claims 1 to 4.

**Revendications**
**Revendications pour les Etats contractants suivants : AT, BE, CH, DE, DK, FR, GB, IT, LI, LU, NL, SE**

1. Agents d'allongement de chaîne à base de 4,4'-méthylenbis-anilines chlorées pour des prépolymères de p-phénylen-méthylendiisocianate(MDI) destinés à des élastomères de coulée de polyuréthane (élastomères PU), constitués par au moins 1 % en poids de
   4,4'-méthylenbis(2,3-dichlor-6-éthylanilin), éventuellement
   4,4'-méthylenbis(2,5-dichlor-6-éthylanilin), 0,1-15 % en poids de
   4,4'-méthylenbis(3-chlor-2,6-diéthylanilin), 30-60 % en poids de
   2,3,3,6-tétrachlor-2,6'-diéthyl-4,4'-méthylènedianiline
   et
   3,3',6'-trichlor-2,6,6'-triéthyl-4-4'-méthylènedianiline
   et
   2',3,3'-trichlor-2,6,6'-triéthyl-4,4'-méthylènedianiline en mélange ou 30-48 % en poids de
   2',3,3'-trichlor-2,6,6'-triéthyl-4,4'-méthylènedianiline, seule.

2. Agents d'allongement de chaîne selon la revendication 1, contenant
   5 à 45 % en poids de 4,4'-méthylenbis(2,3-dichlor-6-éthylanilin)
   0 à 45 % en poids de 4,4-méthylenbis(2,5-dichlor-6-éthylanilin)
   0,1 à 15 % en poids de 4,4'-méthylenbis(3-chlor-2,6-diéthylanilin)
   ainsi que 30 à 60 % en poids
   2,3,3',6-tétrachlor-2,6'-diéthyl-4,4'-méthylène-dianiline
   et
   3,3',6'-trichlor-2,2',6-triéthyl-4,4'-méthylène-dianiline
   et
   2',3,3'-trichlor-2,6,6'-triéthyl-4,4'-méthylène-dianiline
   en mélange ou
   30 à 48 % en poids de la dernière composition citée en dernier, seule.

3. Agents d'allongement de chaîne selon les revendications 1 et 2, caractérisés en ce que leur point de fusion ne dépasse pas 140°C.

4. Elastomère de polyuréthane contenant des agents d'allongement selon au moins une des revendications 1 à 3.

**Revendications pour l'Etat contractant suivant : ES**

1. Procédé pour la préparation d'élastomères de poyuréthane en coulée (élastomères PU), caractérisé en ce que les agents d'allongements de chaîne à base de 4,4'-méthylenbis-anilines constitués par
   au moins 1 % en poids de 4,4'-méthylenbis(2,3-dichlor-6-éthylanilin),
   éventuellement 4,4'-méthylenbis(2,5-dichlor-6-éthylanilin),
   0,1 - 15 % en poids de 4,4'-méthylenbis(3-chlor-2,6-diéthylanilin),
   30 - 60 % en poids de
   2',3,3',6-tétrachlor-2,6'-diéthyl-4,4'-méthylène-dianiline
   et
   3,3',6'-trichlor-2,2',6-triéthyl-4-4'-méthylène-dianiline
   et
   2',3,3'-trichlor-2,6,6'-triéthyl-4,4'-méthylène-dianiline en
   tant que mélange ou 30 - 48 % en poids de

2',3,3'-trichlor-2,6,6'-triéthyl-4,4'-méthylène-dianiline,

seule,

sont ajoutés à des prépolymères de p-phénylen-méthylendiisocyanate (MDI), de façon appropriée à base de composés hydroxy, tels que des polyester-polyols, polycaprolactones ou polyétherpolyols qui présentent une teneur en isocyanate de 3 à 15 %, éventuellement en présence de catalyseurs habituels, agents moussants, agents plastifiants et/ou agents retardataires de combustion, ce en quoi les agents d'allongement de chaîne sont introduits dans des quantités de 0,9 à 1,1 mole, par mole de groupes NCO, dans le prépolymère.

2.  Agents d'allongement de chaîne à base de 4,4'-méthylenbis-anilines chlorées pour des prépolymères de p-phénylen-méthylendiisocyanate (MDI) destinés à des élastomères de coulée de polyuréthane (élastomères PU), constitués par au moins 1 % en poids de 4,4'-méthylenbis(2,3-dichlor-6-éthylanilin), éventuellement 4,4'-méthylenbis(2,5-dichlor-6-éthylanilin),

0,1 - 15 % en poids de 4,4'-méthylenbis(3-chlor-2,6-diéthylanilin),

30 - 60 % en poids de

2',3,3',6-tétrachlor-2,6'-diéthyl-4,4'-méthylène-dianiline

et

3,3',6'-trichlor-2,2',6-triéthyl-4-4'-méthylène-dianiline

et

2',3,3'-trichlor-2,6,6'triéthyl-4,4'-méthylène-dianiline en

tant que mélange ou 30 - 48 % en poids de

2',3,3'-trichlor-2,6,6'-triéthyl-4,4'-méthylène-dianiline, seule.

3.  Agents d'allongement de chaîne selon la revendication 2, contenant

5 à 45 % en poids de 4,4'-méthylenbis(2,3-dichlor-6-éthylanilin)

0 à 45 % en poids de 4,4'-méthylenbis(2,5-dichlor-6-éthylanilin)

0,1 à 15 % en poids de 4,4'-méthylenbis(3-chlor-2,6-diéthylanilin)

ainsi que 30 à 60 % en poids de

2',3,3',6-tétrachlor-2,6'-diéthyl-4,4'-méthylène-dianiline

et

3,3',6'-trichlor-2,2',6-triéthyl-4,4'-méthylène-dianiline

et

2',3,3'-trichlor-2,6,6'-triéthyl-4,4'-méthylène-dianiline

en tant que mélange ou

30 à 48 % en poids de la composition citée en dernier, seule.

4.  Agents d'allongement de chaîne selon les revendications 1 et 3, caractérisés en ce que leur point de fusion ne dépasse pas 140 ° C.

5.  Elastomère de polyuréthane, contenant des agents d'allongement de chaîne selon au moins l'une des revendications 1 à 4.